(19) Europäisches Patentamt
European Patent Office
Office européen des brevets

(11) **EP 2 443 506 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **10725393.2**

(22) Anmeldetag: **11.06.2010**

(51) Int Cl.:
*G02B 3/00* *(2006.01)*     *G03B 21/13* *(2006.01)*
*G03B 21/14* *(2006.01)*     *H04N 9/31* *(2006.01)*

(86) Internationale Anmeldenummer:
**PCT/EP2010/003525**

(87) Internationale Veröffentlichungsnummer:
**WO 2010/145784 (23.12.2010 Gazette 2010/51)**

(54) **PROJEKTIONSDISPLAY UND DESSEN VERWENDUNG**

PROJECTION DISPLAY AND USE THEREOF

DISPOSITIF D'AFFICHAGE PAR PROJECTION ET UTILISATION ASSOCIÉE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **15.06.2009 DE 102009024894**

(43) Veröffentlichungstag der Anmeldung:
**25.04.2012 Patentblatt 2012/17**

(73) Patentinhaber: **Fraunhofer-Gesellschaft zur Förderung der angewandten Forschung e.V.
80686 München (DE)**

(72) Erfinder:
• **SCHREIBER, Peter
07749 Jena (DE)**
• **SIELER, Marcel
07745 Jena (DE)**
• **FÖRSTER, Erik
07743 Jena (DE)**

(74) Vertreter: **Pfenning, Meinig & Partner GbR Patent- und Rechtsanwälte
Theresienhöhe 11a
80339 München (DE)**

(56) Entgegenhaltungen:
EP-A1- 1 447 704    EP-A2- 0 366 462
US-A- 5 825 443    US-B1- 6 344 929

**Beschreibung**

Die Erfindung betrifft ein Projektionsdisplay mit mindestens einer Lichtquelle sowie regelmäßig angeordneten optischen Kanälen. Die optischen Kanäle enthalten mindestens eine Feldlinse, der jeweils eine abzubildende Objektstruktur sowie mindestens eine Projektionslinse zugeordnet ist. Der Abstand der Projektionslinsen zu den zugeordneten Objektstrukturen entspricht der Brennweite der Projektionslinsen, während der Abstand der abzubildenden Objektstrukturen zu der zugeordneten Feldlinse derart gewählt wird, dass eine Köhlersche Beleuchtung der zugeordneten Projektionslinse ermöglicht wird. Es kommt dann zu einer Überlagerung der einzelnen Projektionen zum Gesamtbild.

Die Projektion von statischen und dynamischen Bildinhalten auf einen Schirm wird mit einem Diaprojektor bzw. einem Projektionsdisplay mit einem abbildenden Kanal bzw. drei abbildenden optischen Kanälen zur Farbmischung bzw. durch Laserscanner realisiert. Die für den Einsatz z.B. als mobile bilderzeugende Systeme erforderliche Miniaturisierung führt zu Helligkeitsverlusten des projizierten Bildes.

Denkbare Anwendungsbereiche liegen somit im Bereich persönlicher Kommunikations- und Unterhaltungselektronik, der Datenvisualisierung im Heimbereich und im Automobil.

Ansätze zur Losung dieses Problems stellen farbsequenziell LED-beleuchtete Picoprojektoren dar (US 2006/0285078 A1), deren Miniaturisierung aber auf Grund der Begrenzung des übertragbaren Lichtstroms durch die kleine Oberfläche nur eingeschränkt möglich ist. Dieser Zusammenhang wird durch das optische Grundgesetz der Etendueerhaltung bestimmt. Die Etendue bzw. der Lichtleitwert einer Lichtquelle

$$E = 4\pi\, n^2 A \sin^2\theta$$

ergibt sich aus ihrer leuchtenden Fläche A, dem Halbwinkel der Divergenz $\theta$ und der Brechzahl n und bleibt bei einer idealen optischen Abbildung konstant. Reale Optiken vergrößern die Etendue bzw. verringern die Systemtransmission. Somit wird für einen minimal übertragbaren Lichtstrom innerhalb eines projizierenden optischen Systems auch eine minimale erforderliche Objektfläche benötigt. Bei einkanaligen Projektionssystemen wächst aufgrund von optischen Gesetzmäßigkeiten (natürliche Vignettierung, Abbildungsfehler) mit dieser abzubildenden Fläche in gleichem Maß auch die Systembaulänge, was eine Miniaturisierung erschwert. Durch den hier vorgestellten neuartigen Ansatz des Arrayprojektors wird diese Abhängigkeit zwischen Projektionshelligkeit und Systembaulänge überwunden.

Ein alternatives Konzept zur radikalen Miniaturisierung von Projektionssystemen stellen scannende Laserprojektoren dar. Hier wird ein Bildinhalt durch Scannen eines leistungsmodulierten Laserstrahls über die Bildfläche erzeugt (US 20080265148). Die mit diesem Ansatz erzielbare Helligkeit wird vor allem durch die geringe Leistung verfügbarer Single-Mode Laser bzw. deren eingeschränkte Modulierbarkeit beschränkt. Ein weiterer wesentlicher Nachteil sind die erzielbare Auflösung begrenzende Speckle-Strukturen im projizierten Bild.

Die US 6,344,929 B1 offenbart eine Vorrichtung, welche einen lichtsammelnden Reflektor, eine Lichtquelle im Fokuspunkt des Reflektors und ein erstes Linsenarray als Kondensor für Licht, welches vom Reflektor zurückgeworfen wird, aufweist. Ferner enthält die Vorrichtung ein zweites Linsenarray, welches in oder nahe dem hinteren Fokuspunkt des ersten Linsenarrays angeordnet ist. Schließlich weist die Vorrichtung ein optisches System zur Beleuchtung einer Oberfläche auf, wobei die Beleuchtung mit mehreren Strahlen des zweiten Linsenarrays erfolgt.

Die EP 0 366 462 A2 offenbart ein Projektions-Bildanzeigegerät enthaltend ein Anzeigepaneel, in dem eine Vielzahl von Pixeln in einer Matrix voneinander um einen vorgegebenen ersten Abstand beabstandet angeordnet sind und ein erstes Mikrolinsenarray, das auf der der Lichtquelle zugewandten Seite des Anzeigepaneels angeordnet ist. Das erste Mikrolinsenarray weist eine Vielzahl von Mikrolinsen auf, die voneinander um einen zweiten vorgegebenen Abstand beabstandet in Positionen angeordnet sind, die der Vielzahl von Pixeln im Anzeigepaneel entsprechen. Ferner enthält das Projektions-Bildanzeigegerät ein zweites Mikrolinsenarray, das an der anderen, dem Projektionsschirm zugewandten Seite des Anzeigepaneels angeordnet ist, und das eine Vielzahl von Mikrolinsen aufweist, die an der Vielzahl der Pixel im Anzeigepaneel entsprechenden Positionen angeordnet sind, wobei der erste und zweite Abstand so gewählt sind, dass sie voneinander verschieden sind. Die EP 1 447 704 A1 offenbart eine Vorrichtung zur dreidimensionalen Darstellung, in welcher Bilder in der horizontalen Richtung dargestellt werden, wobei die Diskontinuität der Bilder durch die Bereitstellung von Überlappungen der Anzeigenwinkelbereiche zwischen Bildern mit benachbarten horizonalen Anzeigerichtungen augelöscht werden kann.

Die US 5,825,443 offenbart eine Flüssigkeitskristallvorrichtung zur farbigen Darstellung enthaltend eine Weißlichtquelle, Mittel um das Weißlicht in eine Vielzahl an Lichtstrahlen unterschiedlicher Wellenlänge zu teilen und Mittel um die Lichtstrahlen in verschiedene Richtungen zu leiten und zu modulieren. Ferner enthält die Vorrichtung optische Mittel, um die Lichtstrahlen auf die Bildelementelektroden zu konvergieren und anschließend zu kombinieren und Mittel um ein Farbbild des kombinierten Lichtstrahls darzustellen, wobei die Bildelementelektroden die Lichtstrahlen reflektieren.

Ausgehend hiervon war es Aufgabe der vorliegenden Erfindung, ein Projektionsdisplay bereitzustellen, das eine geringe Bauhöhe aufweist, gleichzeitig aber eine hohe Bildhelligkeit ermöglicht.

Diese Aufgabe wird durch das Projektionsdisplay mit den Merkmalen des Anspruchs 1 gelöst. Die weiteren abhängigen Ansprüche zeigen vorteilhafte Weiterbildungen auf.

Erfindungsgemäß wird ein Projektionsdisplay mit mindestens einer Lichtquelle und regelmäßig angeordneten optischen Kanälen bereitgestellt, wobei die optischen Kanäle mindestens eine Feldlinse aufweisen, der jeweils eine abzubildende Objektstruktur sowie mindestens eine Projektionslinse zugeordnet ist. Der Abstand der Projektionslinsen zu den zugeordneten Objektstrukturen entspricht in etwa der Brennweite der Projektionslinsen, während der Abstand der abzubildenden Objektstrukturen zu der zugeordneten Feldlinse sehr nahe ist im Vergleich zum Abstand der Projektionslinse zu der Objektstrukturen, um eine Köhlersche Beleuchtung der zugeordneten Projektionslinse zu gewährleisten. Durch Überlagerung der einzelnen Projektionen der Projektionslinsen, die ein Projektionslinserarray bilden, entsteht dann durch eine Überlayerung aller Einzelbilder ein reelles Gesamtbild auf einem Schirm oder ein virtuelles Gesamtbild.

Vorzugsweise weist die regelmäßige Anordnung der optischen Kanäle eine weitere gemeinsame Feldlinse zur Aufhebung der Beleuchtungstelezentrie auf.

Es ist weiterhin bevorzugt, dass die optischen Kanäle kanalweise angepasste optische Elemente, insbesondere Konzentratoren zur Ausblendung der inaktiven Bereiche zwischen den Feldlinsen aufweisen.

Die Objektstrukturen weisen vorzugsweise kanalweise eine Vorverzerrung zur Korrektur von Verzeichnungen auf.

Es ist weiterhin bevorzugt, dass die achsenfernen Projektionslinsen eine größere Brennweite zur Korrektur eines Defokus durch den größeren Bildabstand dieser Kanäle aufweisen.

Ebenso ist es möglich, dass die achsenfernen Projektionslinsen bezüglich sagittaler und tangentialer Brennweite durch Auslegung als anamorphotische Linsen, z.B. elliptische Linsen, kanalweise zur Kompensation von Astigmatismus angepasst sind.

Eine bevorzugte Ausführungsform sieht vor, dass mindestens ein optischer Kanal des Projektionsdisplays mindestens zwei Projektionslinsen zur Abberationskorrektur aufweist. Besonders bevorzugt ist hier, dass sämtliche optischen Kanäle derart ausgebildet sind. Es ist bevorzugt, dass zumindest ein Teil der optischen Kanäle unter den Feldlinsen vergrabene Objektstrukturen in Form einer lithographisch strukturierten Objektmaske aufweist.

Vorzugsweise können die Objektstrukturen zumindest teilweise auf einer gewölbten Oberfläche angeordnet sein. Hierbei ist es besonders bevorzugt, dass die Objektstrukturen auf der gewölbten Feldlinsenoberfläche angeordnet sind. Durch diese Anordnung kann eine Bildfeldebnung erreicht werden.

Vorzugsweise weist das Projektionsdisplay eine Baulänge im Bereich von 0,5 bis 10 mm auf.

Eine weitere bevorzugte Ausführungsform sieht vor, dass die Projektionslinsen im Verhältnis zu den Objektstrukturen einen verringerten Mittenabstand (Pitch) aufweisen, wodurch die optischen Achsen der weiter außen angeordneten optischen Kanäle verkippt werden.

Als Linsen werden vorzugsweise elliptische Linsen oder anamorphotische Linsen eingesetzt, wodurch eine Korrektur des Defokus und des Astigmatismus der peripheren optischen Kanäle erzielt werden kann. Ebenso ist es möglich, dass sich die einzelnen Linsen hinsichtlich anderer Parameter unterscheiden.

Es ist bevorzugt, dass das Projektionsdisplay sich in drei Segmente unterteilt, die jeweils einem Grundfarbanteil zugeordnet sind, wodurch eine Vollfarbprojektion ermöglicht wird.

Weiter ist es bevorzugt, dass die Objektstrukturen durch einen digitalen Bildgeber erzeugt werden. Hierfür eignen sich insbesondere LCD- oder OLED-Displays.

Der erfindungsgemäße Gegenstand soll anhand der nachfolgenden Figuren näher erläutert werden, ohne diesen auf die hier gezeigten speziellen Ausführungsformen einschränken zu wollen.

Fig. 1 und Fig. 2 zeigen eine erste erfindungsgemäße Ausführungsform des Projektionsdisplays.

Fig. 3 zeigt eine Schnittdarstellung eines erfindungsgemäßen Projektionsdisplays.

Fig. 4 zeigt in einer Schnittdarstellung ein erfindungsgemäßes Projektionsdisplay mit zusätzlicher makroskopischer Feldlinse.

Fig. 5 zeigt ein erfindungsgemäßes Projektionsdisplay in Kombination mit Konzentratoren in einer Schnittdarstellung.

Fig. 6 und Fig. 7 zeigen schematisch eine Segmentierung des Projektionsbildes eines erfindungsgemäßen Projektionsdisplays.

Fig. 8 und Fig. 9 zeigen schematisch die Realisierung einer Vollfarbprojektion mit einem erfindungsgemäßen Projektionsdisplay.

Fig. 10 zeigt ein erfindungsgemäßes Projektionsdisplay in Kombination mit einem LCD-Display in einer Schnittdarstellung.

Fig. 11 zeigt ein erfindungsgemäßes Projektionsdisplay in Kombination mit einem OLED-Display in einer Schnittdarstellung.

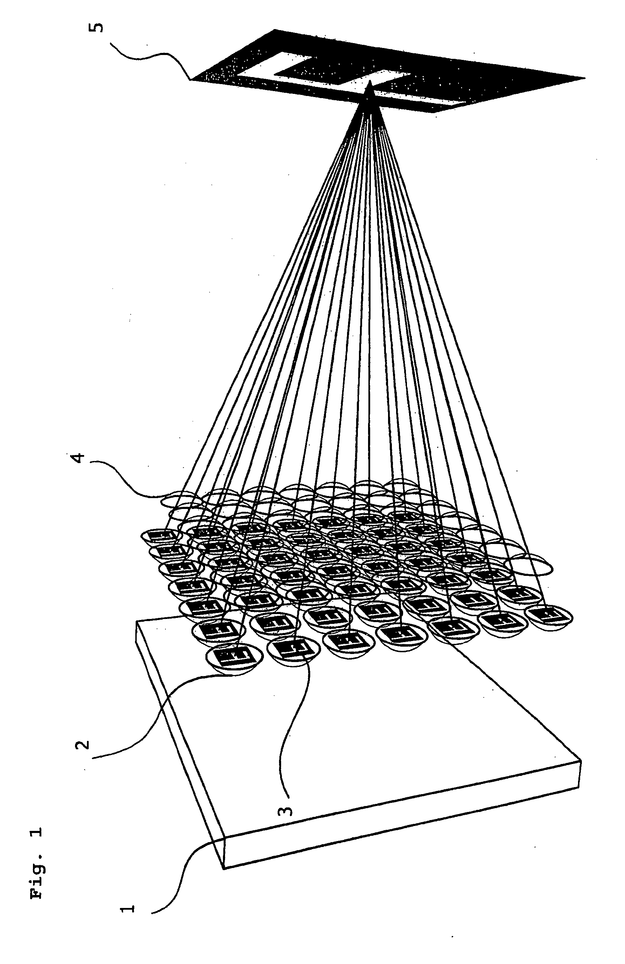

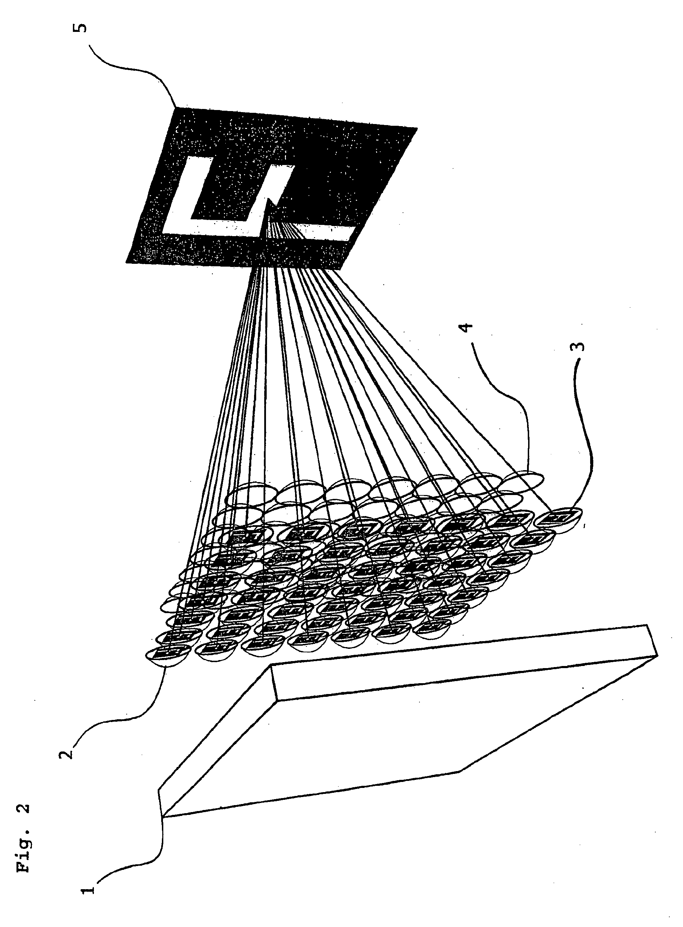

Das ultraflache Array-Projektionsdisplay stellt ein neues optisches Konzept zur Realisierung sehr flacher und gleichzeitig heller Projektionssysteme vor, welches anhand einer beispielhaften Realisierung beschrieben wird (Fig. 1/Fig. 2). Die vorgeschlagene Anordnung besteht aus einer regelmäßigen Anordnung mehrerer Feldlinsen, abzubildender identischer Strukturen und Projektionslinsen. Eine Lichtquelle (1) beleuchtet ein Feldlinsenarray (2), in dessen unmittelbarer Nähe sich das Array der bildgebenden Strukturen (3) befindet. Das jeweilige zu projizierende Objekt befindet sich in der Brennweite der zugeordneten Linse des Projektionslinsenarrays (4). Die korrespondierende Feldlinse befindet sich im Vergleich zum Abstand der Projektionslinse zum Objekt sehr nahe am Objekt, um eine Köhlersche Beleuchtung der Projektionslinse zu gewährleisten. Das Projektionslinsenarray bildet eine Überlagerung aller Einzelbilder auf einen Schirm (5) ab.

Durch das Verwenden von Mikrolinsen in einer regelmäßigen Anordnung als Projektionsobjektive in einer Vielkanalarchitektur ist es möglich, die Baulänge des Gesamtsystems gegenüber herkömmlichen Einkanal-Projektoren gleicher Bildhelligkeit drastisch zu reduzieren. Während die geringe Baulänge des Projektionssystems aus den Brennweiten der Linsen von nur wenigen Millimetern resultiert, sorgt die Objektflächenvervielfachung für eine proportionale Steigerung der Bildhelligkeit. Man erhält somit im Vergleich zu Einkanal-Projektoren Systemproportionen mit größerer lateraler Ausdehnung jedoch bei minimaler Baulänge.

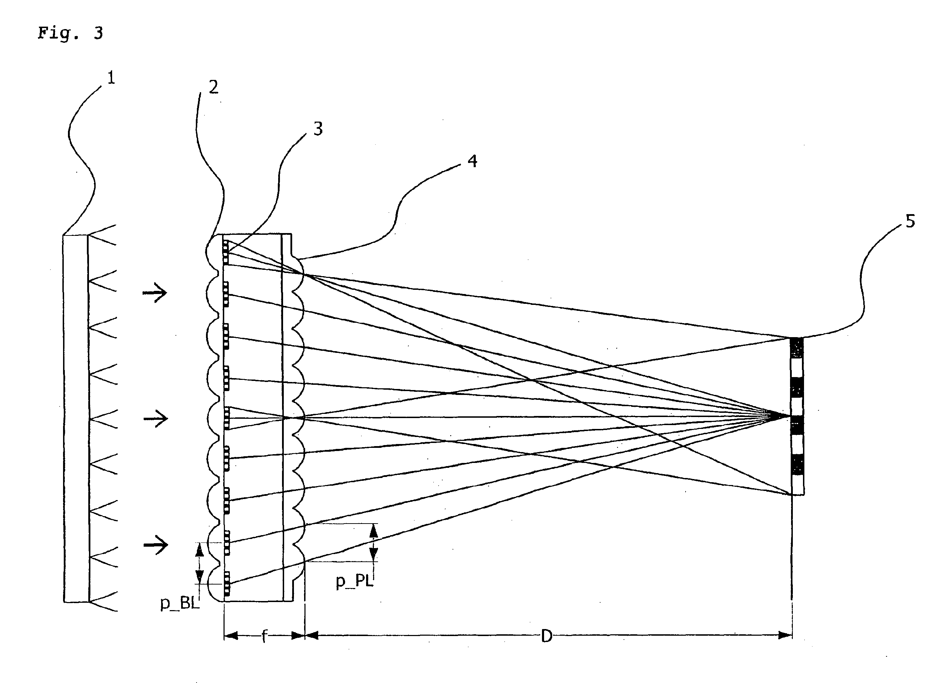

Durch einen leicht verringerten Mittenabstand (Pitch) der Projektionslinsen gegenüber den bildgebenden Strukturen entsteht ein vom Arrayzentrum nach außen wachsender Versatz des jeweiligen Objekts und der entsprechenden Projektionsoptik. Die so entstehende leichte Verkippung der optischen Achsen äußerer Projektoren gegenüber der des Zentralkanals sorgt für eine Superposition der reellen Einzelabbildungen in einer endlichen Entfernung D auf dem Schirm. Es sind keine weiteren makroskopischen, optischen Elemente zur Projektion erforderlich. Die Projektionsentfernung D des Array-Projektionsdisplays ergibt sich aus der Brennweite der Projektionslinse f, dem Mittenabstand der Projektionsoptiken $p_{PL}$ und dem Mittenabstand der Bilder $p_{BL}$ (Fig. 3). Die Vergrößerung M des Array-Projektionsdisplays folgt aus dem Verhältnis der Projektionsentfernung D zur Brennweite der Projektionslinse f.

$$D = \frac{f * p_{PL}}{p_{BL} - p_{PL}}$$

$$M = \frac{D}{f} = \frac{p_{PL}}{p_{BL} - p_{PL}}$$

Die Anordnung ähnelt dem bildgebenden Teil eines Systems zur integralen Fotografie, zeigt allerdings wesentliche Unterschiede in Funktion und Anordnung: Während bei der integralen Fotografie ein virtuelles Bild mit 3-dimensionalen Bildinhalten im Durchlicht erzeugt wird (keine Projektion), generiert das ultraflache Array-Projektionsdisplay eine zweidimensionale Projektion auf einem Schirm. Die Inhalte der bildgebenden Strukturen innerhalb eines integralen abbildenden Systems weichen zur Generierung des räumlichen Eindrucks über das Linsenarray kontinuierlich voneinander ab. Bei der vorgestellten Erfindung werden hingegen identische Objekte projiziert.

Durch die Superposition der Projektionen von Projektionslinsen mit Köhlerscher Beleuchtung erzielt das System parallel zur Projektion die Homogenisierung der Lichtquelle, was in herkömmlichen einkanaligen Projektionssystem zusätzliche Maßnahmen notwendig macht.

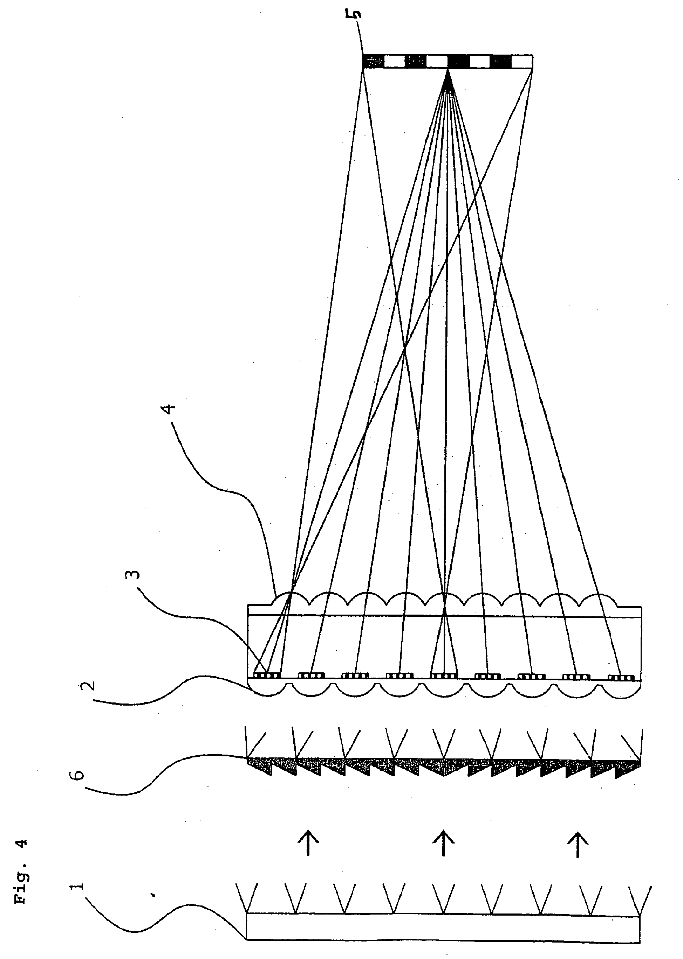

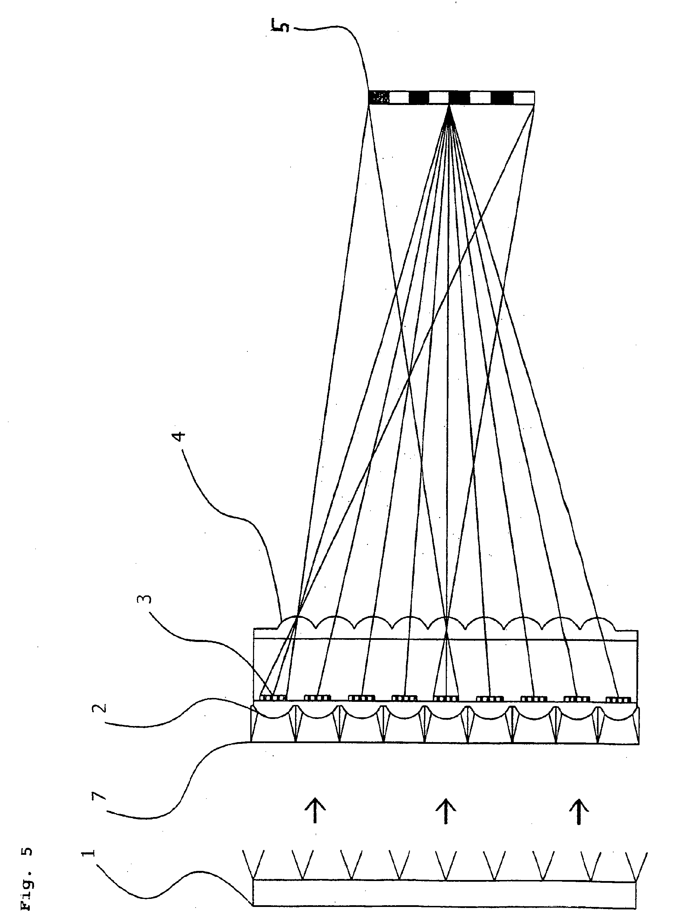

Der maximale Öffnungswinkel der Lichtquelle soll den Akzeptanzwinkel der Feldlinse, unter dem die Austrittspupille der Projektionslinse voll ausgeleuchtet wird, nicht überschreiten, da sonst dem eigentlichen Bild benachbarte Störbilder entstehen können. Als Beleuchtung können z.B. sehr flache Einheiten, ähnlich den Hinterleuchtungen von transmittiven Displays (US 020080310160 A1) mit angepassten Auskoppelstrukturen verwendet werden. Der Akzeptanzwinkel peripherer Einzelprojektoren des Projektorarrays wird durch die telezentrische Abstrahlcharakteristik der Quelle im Vergleich zum zentralen Projektorkanal eingeschränkt. Eine zusätzliche makroskopische Feldlinse z.B. in Form einer dünnen Fresnellinse (6) kann diese Telezentrie aufheben und somit die Gesamthelligkeit der Projektion weiter steigern (Fig. 4). Das Aufbringen geeigneter lichtführender Elemente z.B. Konzentratoren (7) als Teil des Feldlinsenarrays kann die Totzonen zwischen den Feldlinsen ausblenden und somit den Füllfaktor erheblich steigern (Fig. 5).

Das Verwenden von Linsenarrays mit kontinuierlich über das Array variablen Parametern (z.B. unterschiedliche Brennweiten der Projektionslinsen über das Array bzw. unterschiedliche Brennweiten tangential und sagittal durch Ausbildung als elliptische Linsen) kann eine Korrektur des Defokus und des Astigmatismus der peripheren Projektionsoptiken erzielen. Um den Einfluss der Verzeichnung sowohl des Einzelkanals als auch der Superposition aller abbilden Kanäle zu unterdrücken ist eine kanalweise Vorverzerrung der bildgebenden Strukturen möglich.

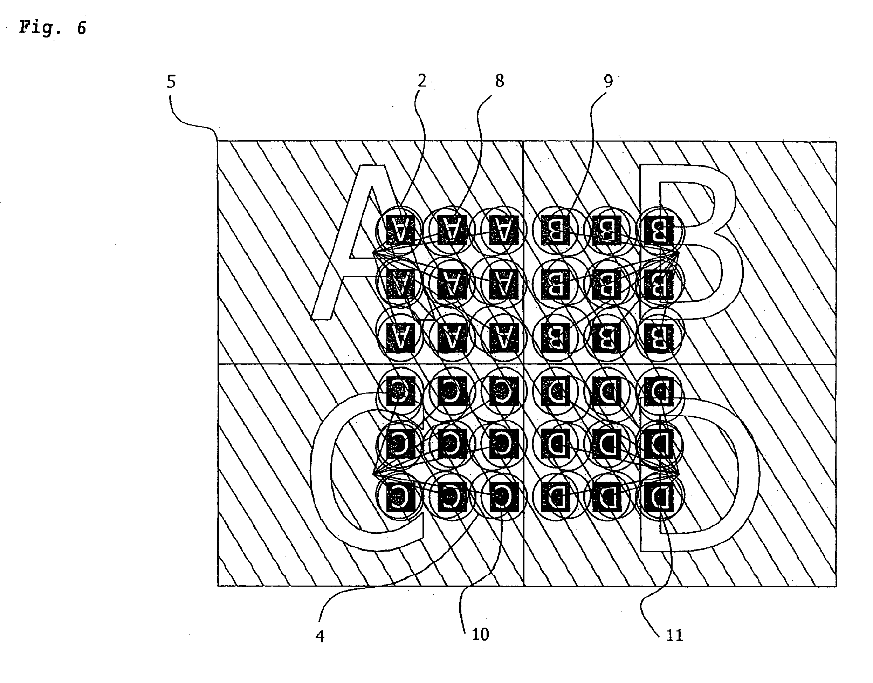

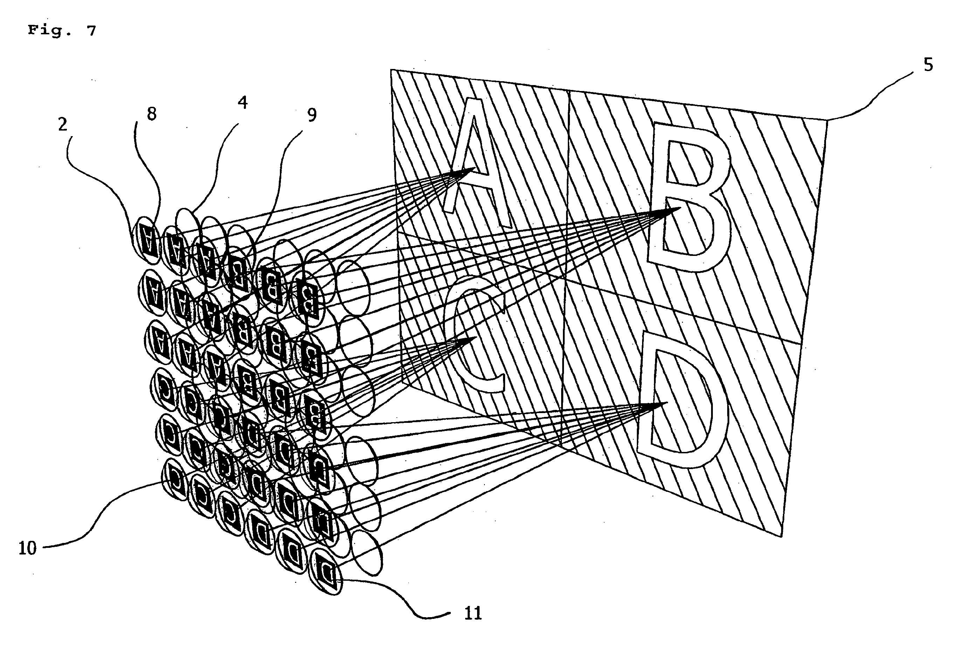

Die Verwendung von kurzbrennweitigen Mikrolinsen ist mit einer Einschränkung der übertragbaren Informationen verbunden. Die darstellbare Bildauflösung wird durch die Überlagerung von Aberrationen und Beugungseffekten begrenzt. Eine Steigerung der Gesamtinformationsübertragung ist möglich durch Segmentierung des Projektionsbildes und Zuweisen definierter Gesichtsfeldbereiche an Gruppen von Einzelprojektoren (8-11) in einer verschränkten Anordnung innerhalb eines Array-Projektionsdisplays (Fig. 6/Fig. 7).

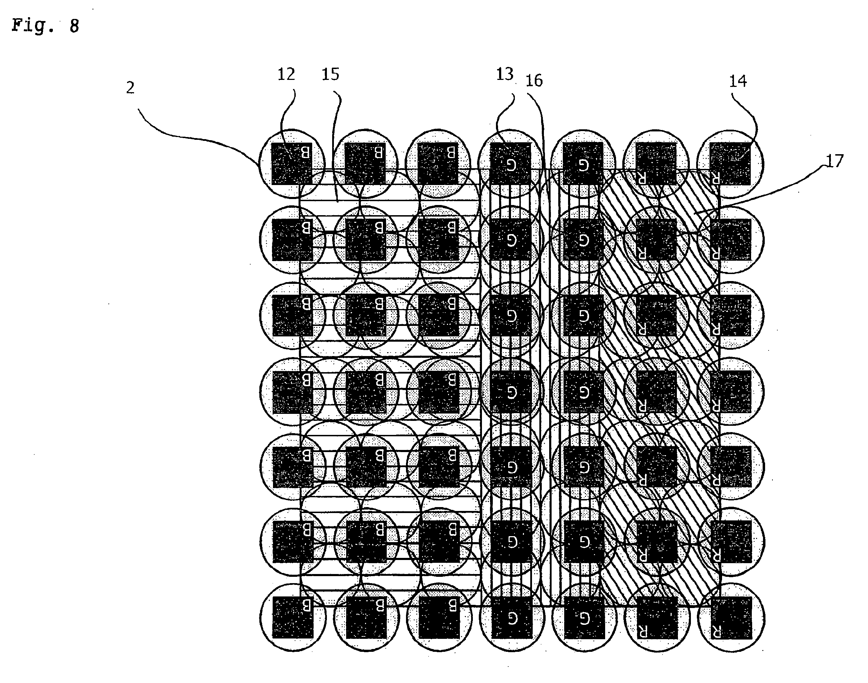

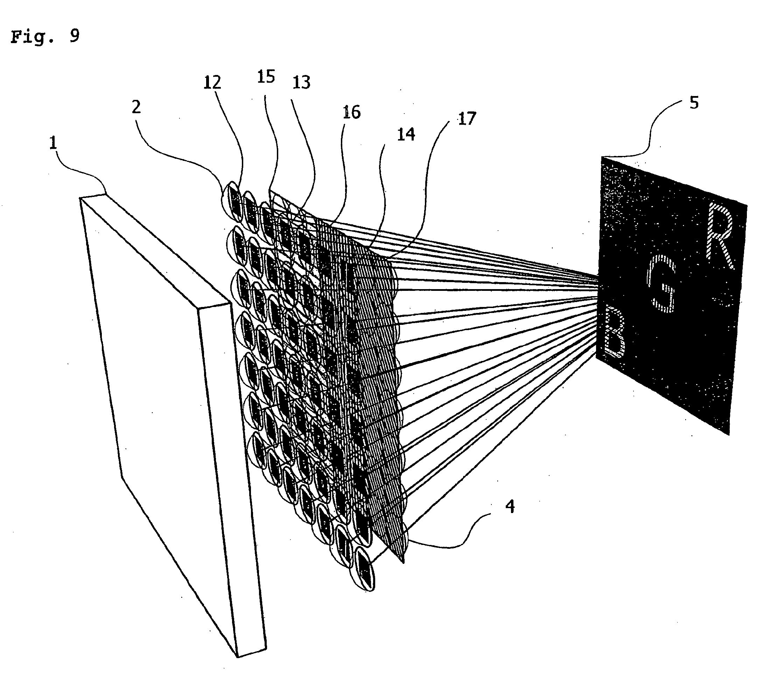

Eine Vollfarbprojektion wird durch Verschachteln von drei Array-Projektionsdisplays, von denen jedes eine Grundfarbanteil des zu projizierenden Bildes in Form von identischen Objektstrukturen (12-14) darstellt, ermöglicht (Fig. 8/Fig. 9). Dieser Ansatz zeichnet sich gegenüber der Farbstrukturierung von RGB-Subpixeln mit Mikrometerdimensionen durch technologische Einfachheit auf Grund der wesentlich größeren, den jeweiligen Kanälen zugeordneten, Farbfilterstrukturen (15-17) im Bereich mehrerer 100 μm aus. Gegenüber üblichen farbsequenziellen Picoprojektoren (s.o.) gibt es keine störenden Farbeffekte bei Projektion auf bewegte Flächen. Weiter besteht die Möglichkeit der kanalweisen Farbfehlerkorrektur, welche im Vergleich zu herkömmlichen einkanaligen Projektionssystemen mit komplexen achromatisierten mehrlinsigen Projektionsobjektiven eine drastische Vereinfachung der Projektionsoptik darstellt.

Wird die Objektstruktur durch einen digitalen Bildgeber generiert, der als Bildinhalt ein Array identischer Bilder in variablem Pitch zeigt, ermöglicht das Projektionsdisplay die Darstellung dynamischer Bildinhalte. Durch elektronischen Versatz der Einzelbilder auf dem Bildgeber kann die Projektionsdistanz ohne mechanische Komponenten geregelt werden (s.o. Formel für den Projektionsabstand D). In Kombination mit einer Abstandmessung zum Schirm kann somit innerhalb eines Regelkreises die Projektionsdistanz elektronisch nachgeführt werden.

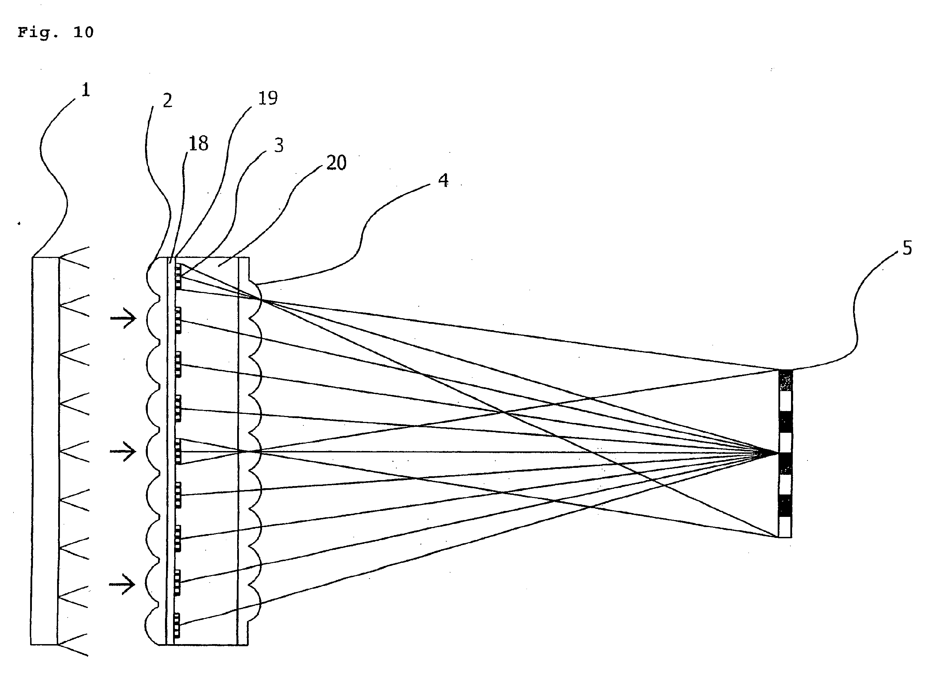

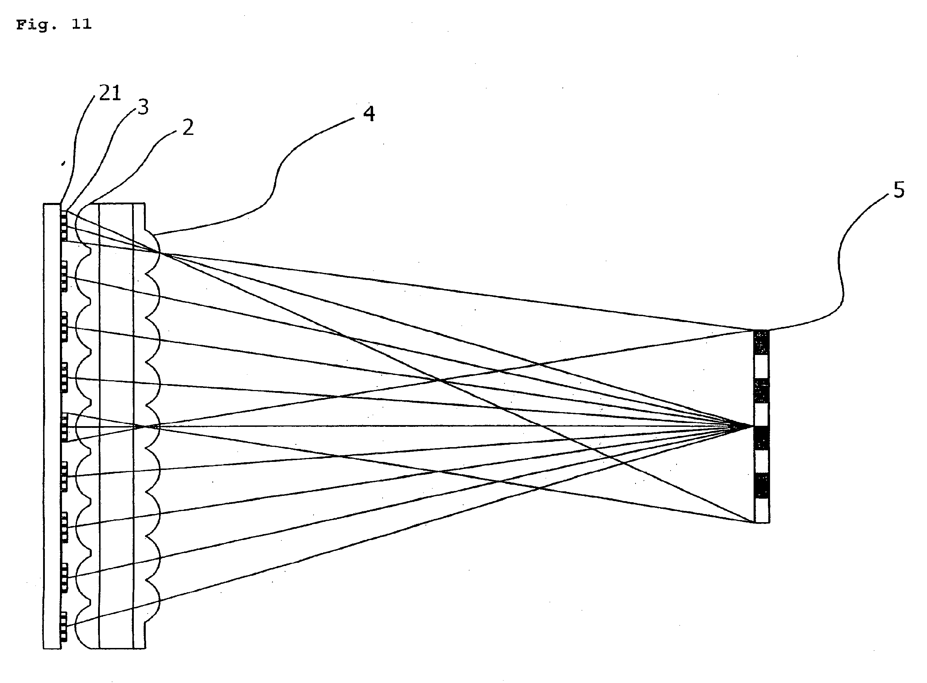

Der Bildgeber kann z.B. ein transmittives LCD-Display (Fig. 10) sein. In einem monolithischen Aufbau sind die Feldlinsen (2) hier direkt auf dem dünnen Deckglas (18) der aktiven LED-Ebene (19) strukturiert. Das Glassubstrat (20) des LCD kann gleichzeitig als Substrat für das Projektionslinsenarray (4) dienen. Das Farbfilterarray kann entweder unter das Feld- oder das Projektionslinsenarray vergraben oder von außen auf diese aufgebracht sein. Eine andere Realisierung mit einem aktiv emittierenden OLED-Display (Fig. 11) besteht nur aus dem Tandem-Linsenarray, wobei die Feldlinsen hier im Lichtpfad direkt hinter den bildgebenden Strukturen angeordnet sind. Die Farbdarstellung kann bei weiß emittierenden OLEDs wieder durch im Array vergrabene oder außen auf das Array aufgebrachte Farbfilter realisiert werden. Eine vorteilhafte Realisierung ist mit Clustern jeweils monochrom rot, grün und blau abstrahlender OLEDs möglich, die jeweils einer Projektionsoptik zugeordnet sind, möglich. Es werden dann natürlich keine Farbfilter mehr benötigt und so eine höhere Systemtransmission erreicht. Realisierungen mit reflektiven Displays sind ebenfalls denkbar.

## Patentansprüche

1.  Projektionsdisplay mit mindestens einer Lichtquelle (1) und regelmäßig angeordneten optischen Kanälen enthaltend mindestens eine Feldlinse (2), der jeweils eine abzubildende Objektstruktur (3) sowie mindestens eine Projektionslinse (4) zugeordnet ist, wobei der Abstand der Projektionslinsen (4) zu den zugeordneten Objektstrukturen (3) der Brennweite der Projektionslinsen (4) entspricht, **dadurch gekennzeichnet, dass** der Abstand der abzubildenden identischen Objektstrukturen (3) zu der zugeordneten Feldlinse sehr nahe ist im Vergleich zum Abstand der Projektionslinse (4) zu den Objektstrukturen (3), um eine Köhlersche Beleuchtung der zugeordneten Projektionslinse (4) zu gewährleisten, und wobei die einzelnen Projektionen der Projektionslinsen (4), die ein Projektlinsenarray bilden, eine Überlagerung aller Einzelbilder zu einem reellen Gesamtbild auf einem Schirm (5) oder einem virtuellen Gesamtbild abbilden.

2.  Projektionsdisplay nach Anspruch 1, **dadurch gekennzeichnet, dass** die Anordnung der optischen Kanäle eine weitere gemeinsame Feldlinse zur Aufhebung der Beleuchtungstelezentrie aufweisen.

3.  Projektionsdisplay nach einem der vorhergehenden Ansprüche, **dadurch gekennzeichnet, dass** die optischen Kanäle kanalweise angepasste optische Elemente, insbesondere Konzentratoren (7) zur Ausblendung der inaktiven Bereiche zwischen den Feldlinsen aufweisen.

4.  Projektionsdisplay nach einem der vorhergehenden Ansprüche, **dadurch gekennzeichnet, dass** die Objektstrukturen (3) kanalweise eine Vorverzerrung zur Korrektur einer Verzeichnung aufweisen.

5.  Projektionsdisplay nach einem der vorhergehenden Ansprüche, **dadurch gekennzeichnet, dass** die achsenfernen Projektionslinsen (4) eine größere Brennweite zur Korrektur eines Defokus durch den größeren Bildabstand dieser Kanäle aufweisen.

6.  Projektionsdisplay nach einem der vorhergehenden Ansprüche, **dadurch gekennzeichnet, dass** die achsenfernen Projektionslinsen (4) bezüglich sagittaler und tangentialer Brennweite durch Auslegung als anamorphotische Linsen, z.B. elliptische Linsen, kanalweise zur Kompensation von Astigmatismus angepasst sind.

7.  Projektionsdisplay nach einem der vorhergehenden Ansprüche, **dadurch gekennzeichnet, dass** mindestens ein optischer Kanal mindestens zwei Projektionslinsen (4) zur Aberrationskorrektur aufweist.

8.  Projektionsdisplay nach einem der vorhergehenden Ansprüche, **dadurch gekennzeichnet, dass** zumindest ein Teil der optischen Kanäle unter den Feldlinsen vergrabene Objektstrukturen (3) in Form einer lithographisch strukturierten Objektmaske aufweist.

9. Projektionsdisplay nach einem der vorhergehenden Ansprüche, **dadurch gekennzeichnet, dass** die Objektstrukturen (3) zumindest teilweise auf einer gewölbten Oberfläche, insbesondere auf der Feldlinsenoberfläche, zur Bildfeldebnung angeordnet sind.

10. Projektionsdisplay nach einem der vorhergehenden Ansprüche, **dadurch gekennzeichnet, dass** das Projektionsdisplay eine Baulänge im Bereich von 0,5 bis 10 mm aufweist.

11. Projektionsdisplay nach einem der vorhergehenden Ansprüche, **dadurch gekennzeichnet, dass** die Projektionslinsen (4) im Verhältnis zu den Objektstrukturen (3) einen verringerten Mittenabstand aufweisen, wodurch die optischen Achsen der äußeren optischen Kanäle verkippt werden.

12. Projektionsdisplay nach einem der vorhergehenden Ansprüche, **dadurch gekennzeichnet, dass** das Projektionsdisplay in drei Segmente unterteilt ist, die jeweils einem Grundfarbanteil zugeordnet sind, wodurch eine Vollfarbprojektion ermöglicht wird.

13. Projektionsdisplay nach Anspruch 12, **dadurch gekennzeichnet, dass** die Anzahl der der jeweiligen Grundfarbe zugeordneten Linsen und Objektstrukturen (3) so gewählt wird, dass ein Weißabgleich, der die spektralen Eigenschaften der Quelle oder der Quelle und Farbfilter kompensiert, bei gleichzeitiger Maximierung der Bildhelligkeit ermöglicht wird.

14. Projektionsdisplay nach einem der vorhergehenden Ansprüche, **dadurch gekennzeichnet, dass** die Objektstruktur (3) durch einen digitalen Bildgeber, insbesondere ein LCD-Display oder ein OLED-Display, erzeugt wird.

15. Projektionsdisplay nach einem der vorhergehenden Ansprüche, **dadurch gekennzeichnet, dass** das Projektionsdisplay eine Einheit zum elektronischen Versatz der Einzelbilder aufweist, wodurch die Projektionsdistanz geregelt wird und/oder dass das Projektionsdisplay eine Einheit zur Abstandsmessung zum Schirm (5) aufweist, die in Kombination mit der Einheit zum elektronischen Versatz eine elektronische Nachführung der Projektionsdistanz ermöglicht.

**Claims**

1. Projection display having at least one light source (1) and regularly-disposed optical channels, comprising at least one field lens (2), to which respectively one object structure (3) to be imaged and also at least one projection lens (4) are assigned, the distance of the projection lenses (4) from the assigned object structures (3) corresponding to the focal distance of the projection lenses (4), **characterised in that** the distance of the identical object structures (3) to be imaged from the assigned field lens is very close in comparison with the distance of the projection lens (4) from the object structures (3), in order to ensure a Köhler illumination of the assigned projection lens (4), and the individual projections of the projection lenses (4), which form a projection lens array, being superimposed to form an actual total image on a screen (5) or a virtual total image.

2. Projection display according to claim 1, **characterised in that** the arrangement of the optical channels has a further common field lens for compensating for the illumination telecentricity.

3. Projection display according to one of the preceding claims, **characterised in that** the optical channels have optical elements adapted with respect to the channels, in particular concentrators (7) for masking the inactive regions between the field lenses.

4. Projection display according to one of the preceding claims, **characterised in that** the object structures (3) have a predistortion, with respect to the channels, for correction of a distortion.

5. Projection display according to one of the preceding claims, **characterised in that** the projection lenses (4) remote from the axes have a greater focal distance for correction of a lack of focus due to the larger image distance of these channels.

6. Projection display according to one of the preceding claims, **characterised in that** the projection lenses (4) remote from the axes are adapted, with respect to sagittal and tangential focal distance, by being designed as anamorphotic lenses, e.g. elliptical lenses, with respect to the channels, for compensation of astigmatism.

7. Projection display according to one of the preceding claims, **characterised in that** at least one optical channel has at least two projection lenses (4) for aberration correction.

8. Projection display according to one of the preceding claims, **characterised in that** at least a part of the optical channels has object structures (3) buried below the field lenses in the form of a lithographically-structured object mask.

9. Projection display according to one of the preceding claims, **characterised in that** the object structures (3) are disposed at least partially on a curved surface, in particular on the field lens surface, in order to level out the image field.

10. Projection display according to one of the preceding claims, **characterised in that** the projection display has a constructional length in the range of 0.5 to 10 mm.

11. Projection display according to one of the preceding claims, **characterised in that** the projection lenses (4) have a reduced centre distance relative to the object structures (3), as a result of which the optical axes of the outer optical channels are tilted.

12. Projection display according to one of the preceding claims, **characterised in that** the projection display is subdivided into three segments which are assigned respectively to a primary colour component, as a result of which a full colour projection is made possible.

13. Projection display according to claim 12, **characterised in that** the number of lenses assigned to the respective primary colour and object structures (3) is chosen such that a white balance which compensates for the spectral properties of the source or of the source and colour filters is made possible with simultaneous maximisation of the image brightness.

14. Projection display according to one of the preceding claims, **characterised in that** the object structure (3) is produced by a digital imager, in particular an LCD display or an OLED display.

15. Projection display according to one of the preceding claims, **characterised in that** the projection display has a unit for electronic offset of the individual images, as a result of which the projection distance is controlled and/or **in that** the projection display has a unit for measuring the distance from the screen (5), which, in combination with the unit for the electronic offset, enables electronic tracking of the projection distance.

**Revendications**

1. Affichage par projection avec au moins une source de lumière (1) et des canaux optiques disposés régulièrement, comprenant au moins une lentille de champ (2), à laquelle correspond une structure d'objet à représenter (3) ainsi qu'au moins une lentille de projection (4), la distance entre les lentilles de projection (4) et les structures d'objets à représenter (3) correspondant à la distance focale des lentilles de projection (4),
**caractérisé en ce que** la distance entre les structures d'objets identiques à représenter (3) et la lentille de champ correspondante est très proche de la distance entre la lentille de projection (4) et les structures d'objets (3), afin de garantir un éclairage de Köhler de la lentille de projection (4) correspondante et les différentes projections des lentilles de projection (4), qui forment une matrice de lentilles de projection, représentant une superposition de toutes les images individuelles formant une image d'ensemble réelle sur un écran (5) ou une image d'ensemble virtuelle.

2. Affichage par projection selon la revendication 1, **caractérisé en ce que** la disposition des canaux optiques comprennent une lentille de champ commune supplémentaire pour l'annulation de la télécentrie d'éclairage.

3. Affichage par projection selon l'une des revendications précédentes, **caractérisé en ce que** les canaux optiques sont des éléments optiques adaptées par canaux, plus particulièrement des concentrateurs (7) pour le masquage des zones inactives entre les lentilles de champ.

4. Affichage par projection selon l'une des revendications précédentes, **caractérisé en ce que** les structures d'objets (3) présentent, par canaux, une prédistorsion pour la correction d'une aberration.

5. Affichage par projection selon l'une des revendications précédentes, **caractérisé en ce que** les lentilles de projection (4) éloignées de l'axe présentent une distance focale supérieure à la correction d'une défocalisation due à la distance d'image plus importante de ces canaux.

6. Affichage par projection selon l'une des revendications précédentes, **caractérisé en ce que** les lentilles de projection (4) éloignées de l'axe sont adaptées, par canaux, en ce qui concerne la distance focale sagittale et tangentielle, pour la compensation de l'astigmatisme grâce à une conception en tant que lentilles anamorphiques, par exemple des lentilles elliptiques.

7. Affichage par projection selon l'une des revendications précédentes, **caractérisé en ce qu'**au moins un canal optique comprend au moins deux lentilles de projection (4) pour la correction des aberrations.

8. Affichage par projection selon l'une des revendications précédentes, **caractérisé en ce qu'**au moins une partie des canaux optiques présente des structures d'objets (3) dissimulées sous les lentilles de champ, sous la forme d'un masque d'objet structuré de manière lithographique.

9. Affichage par projection selon l'une des revendications précédentes, **caractérisé en ce que** les structures d'objets (3) sont disposées au moins partiellement sur une surface incurvée, plus particulièrement à la surface des lentilles de champ, pour l'aplanissement du champ d'image.

10. Affichage par projection selon l'une des revendications précédentes, **caractérisé en ce que** l'affichage par projection présente une longueur de l'ordre de 0,5 à 10 mm.

11. Affichage par projection selon l'une des revendications précédentes, **caractérisé en ce que** les lentilles de projection (4) présentent, par rapport aux structures d'objets (3), une distance moyenne réduite, ce qui permet de basculer les axes optiques des canaux optiques externes.

12. Affichage par projection selon l'une des revendications précédentes, **caractérisé en ce que** l'affichage par projection est divisé en trois segments à chacun desquels correspond une composante de couleur primaire, ce qui permet une projection en couleurs.

13. Affichage par projection selon la revendication 12, **caractérisé en ce que** le nombre de lentilles correspondant à chaque couleur primaire et des structures d'objets (3) sont choisis de façon à permettre une balance des blancs, qui compense les propriétés spectrales de la source ou de la source et du filtre de couleur, tout en permettant en même temps une maximisation de la luminosité de l'image.

14. Affichage par projection selon l'une des revendications précédentes, **caractérisé en ce que** la structure d'objet (3) est produite par un imageur numérique, plus particulièrement un affichage LCD ou un affichage OLED.

15. Affichage par projection selon l'une des revendications précédentes, **caractérisé en ce que** l'affichage par projection comprend une unité pour le décalage électronique des images individuelles, ce qui permet de régler la distance de projection et/ou **en ce que** l'affichage par projection comprend une unité pour la mesure de distance par rapport à l'écran (5), qui permet, en combinaison avec l'unité de décalage électronique, une régulation électronique de la distance de projection.

Fig. 1

Fig. 2

Fig. 3

EP 2 443 506 B1

Fig. 4

Fig. 5

Fig. 6

Fig. 7

Fig. 8

Fig. 9

EP 2 443 506 B1

Fig. 10

EP 2 443 506 B1

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060285078 A1
- US 20080265148 A
- US 6344929 B1
- EP 0366462 A2
- EP 1447704 A1
- US 5825443 A
- US 020080310160 A1